# FASCICULE DE BREVET EUROPEEN

(11) **EP 3 260 405 B1**
(45) Date de publication et mention de la délivrance du brevet: **18.11.2020**
(21) Numéro de dépôt: 17000960.9
(22) Date de dépôt: 07.06.2017
(51) Int. Cl.: B65G 69/00, B61D 45/00, B62D 53/08

(54) **DISPOSITIF D'IMMOBILISATION D'UNE STRUCTURE MOBILE À BÉQUILLES DE RÉCEPTION DE CHARGEMENT ET PROCÉDÉ DE MISE EN OEUVRE**
VORRICHTUNG ZUR IMMOBILISIERUNG EINER BEWEGLICHEN STRUKTUR MIT LASTAUFNAHMESTÜTZEN, UND ENTSPRECHENDES ANWENDUNGSVERFAHREN
DEVICE FOR IMMOBILISING A MOBILE STRUCTURE WITH LOAD-RECEIVING STANDS AND METHOD FOR IMPLEMENTING SAME

(30) Priorité: 21.06.2016 FR 1600993
(43) Date de publication de la demande: 27.12.2017
(73) Titulaire: EXPRESSO France SAS, 67319 Wasselonne (FR)
(72) Inventeur: Roere, Michel, 67720 Weyersheim (FR)
(74) Mandataire: Munier, Laurent

(56) Documents cités:
- WO-A1-00/42885
- US-A- 3 164 346
- US-A- 3 180 282
- US-A- 3 189 307
- US-A- 4 630 989
- US-A- 4 818 170
- US-A- 5 004 386
- US-A- 6 089 544
- US-A1- 2005 102 042
- US-B1- 6 520 472

## Description

Dispositif d'immobilisation d'une structure mobile à béquilles de réception de chargement et procédé de mise en œuvre.

La présente invention se rapporte au domaine de la manutention routière, en particulier à l'immobilisation de structure à béquilles de réception de chargement pour le transport, telle que conteneur, plateau ou caisse mobile suite déplacement par véhicule routier.

L'invention concerne en premier lieu un dispositif de béquillage de la caisse mobile destinée à coopérer avec un véhicule routier camion, fourgon, remorque ou autres pour éviter les accidents lors de la mise en œuvre d'une procédure de chargement et/ou déchargement de ladite structure.

Or, pour permettre le chargement ou déchargement, les structures à béquilles de réception de marchandises telles que conteneurs, châssis ou caisses sont déposées par les camions le long du quai de chargement suivant leur axe longitudinal.

Le camion vient en marche arrière jusqu'à ce que la caisse soit au contact du quai. Cette caisse par exemple une caisse dite caisse C étant équipée de quatre béquilles, celle-ci sont en fonction avec appui sur le sol.

Le bas de la caisse se retrouve plus haut que le plateau du camion qui s'en va.

Les manutentionnaires considèrent qu'une structure posée sur le sol via des vérins ou des béquilles ne bouge pas et par conséquent ne cherchent pas à l'immobiliser.

Pourtant, les béquilles ne sont pas placées aux extrémités avant et arrière de la caisse. Il en résulte un porte-à-faux en particulier dans la partie qui fait pont entre les béquilles et le quai. Les manutentionnaires transportent du matériel présentant un poids important parfois à l'aide de chariots élévateurs dont le poids se rajoute à celui du chargement qui appui au niveau du porte-à-faux.

Il en résulte un risque de cabrage de la caisse mobile, à savoir que la partie proche du quai s'affaisse et la partie éloignée du quai se soulève. Le plancher de la structure prend l'inclinaison d'un toboggan et déverse le chariot élévateur, la cargaison et les manutentionnaires au pied du quai. Dans une telle chute, non seulement du manutentionnaire mais aussi du matériel déjà chargé ce dernier peut heurter le manutentionnaire. Ce mouvement de la caisse, le poids et les forces mises en oeuvre par le cabrage et l'affaissement peuvent fausser, voire déclencher un flambage des béquilles avec un affaissement de la structure ; même si elle est retombée sur le sol. De même les poussées générées par les déplacements et freinage des engins de manutention, peuvent causer le flambage des béquilles de la structure. Dans le cas du flambage des béquilles, surtout si celles-ci sont affaiblies par un choc avec un véhicule, nous avons ici un autre risque de chute. Un déplacement vers l'avant de la caisse mobile, avec pour conséquence une perte de liaison entre le plancher de la caisse et le quai. Cette perte de liaison en créant un vide peut générer des causes d'accident, aussi bien pour rentrer que pour sortir de cette caisse mobile.

US 3,164,346 décrit un dispositif selon le préambule de la revendication 1.

L'invention a pour but de résoudre ces problèmes en empêchant le cabrage, l'affaissement et l'avancée, avec un dispositif d'immobilisation d'une structure mobile, structure à béquilles et de réception de marchandises telle qu'une caisse, un plateau ou un conteneur lors de la manutention par un béquillage centré suivant l'axe de l'engin de transport.

La solution de ce problème technique doit surmonter une autre difficulté, suivant le type de structure, le porte-à-faux et le centre de gravité, comme le poids des marchandises chargées ne sont pas situés au même endroit de la structure.

L'invention est définie par les caractéristiques de la revendication 1 et par la méthode selon la revendication 11.

Pour résoudre cette partie supplémentaire du problème technique le dispositif selon l'invention peut circuler sous la structure car il comporte un chariot coulissant. Ce qui lui permet de présenter une très faible hauteur quand l'équipement du chariot est replié. Cette faible hauteur lui permet également de ne pas être accroché par les structures basses du matériel roulant qui amène ces caisses mobiles.

Au surplus, une liaison entre le sol et la structure doit au moins partiellement être placée sous la structure. Ainsi, elle demande à pouvoir circuler sans être gêné par la structure et pour cela, le chauffeur ou le manutentionnaire doit pouvoir commander les mouvements du dispositif dans un accès facile.

Le béquillagé selon l'invention est obtenu par un dispositif comprenant un chariot plat et coulissant équipé d'une béquille escamotable commandée depuis une colonne déportée.

Le chariot étant plat et coulissant présente une hauteur suffisamment faible pour se déplacer sous la structure destinée à recevoir le chargement. Ce qui lui permet d'être placé au niveau de l'axe central de la caisse et de se déplacer à proximité du porte-à-faux. A ce moment, la béquille escamotable peut être déployé en position travail jusqu'au contact de la partie inférieure de la caisse et supprime de ce fait le porte-à-faux qui entraîne les risques de cabrage et de chute. Ces déplacements du chariot et de la tête ou patin de la béquille escamotable sont possibles par l'actionnement à l'aide d'une colonne technique déportée qui est placée à proximité du quai en dehors de l'emplacement du véhicule. Ainsi les manutentionnaires ont accès aux organes de commande et de signalisation placée dans cette colonne sans aller eux-mêmes sous la structure, même en cas de panne de courant : la colonne étant équipée d'un dispositif de repliement manuel. Les organes de commande, peuvent et seront dans la majorité des cas déportés et placés à l'intérieur des bâtiments. Les commandes de mouvements seront toutes à pression maintenue

En vue, d'éviter les accidents entre le véhicule qui vient reprendre la structure mobile, le chariot présente un actionneur de signalisation sous la forme d'une bavette suffisamment inclinée, pour pouvoir être poussée par le parechoc du véhicule. La poussée supplémentaire sur cet actionneur enclenche un signal. Cette pièce sera bas vers l'arrière en formant une bavette qui forme un contact avec le pare-chocs du véhicule. Ce qui enclenche un signal lumineux et sonore, perceptible pour le chauffeur, de façon à l'inciter à arrêter sa manœuvre de recul.

Dans le but d'immobiliser une caisse mobile, la tête de blocage au niveau du patin de la béquille escamotable présente un taquet escamotable qui par pivotement vient talonner, un longeron de la partie inférieure de la caisse mobile, provoquant son immobilisation.

La présente invention propose également un procédé d'immobilisation de la structure de réception de chargement pendant les phases de transbordement suivant le programme disposé dans la colonne déportée.

L'invention sera mieux comprise à la lecture des figures données à titre d'exemples, non limitatifs et sur lesquels :
La Fig. 1 représente en élévation une vue de ¾ de côté d'un dispositif de béquillage selon l'invention position repos ;
La Fig. 1.2 représente en élévation vue de ¾ de côté une armoire technique déportée de commande de dispositif selon la Fig. 1, la colonne technique représentée et coiffée du coffret électrique de commande, ce coffret pouvant être déporté à l'intérieur du bâtiment ;
La Fig. 2 est une vue d'ensemble du quai et de la structure mobile de réception de marchandise montrant l'emplacement du dispositif selon l'invention correspondant aux Fig. 1 et 1.2 en position repos ;
La Fig. 3 est une vue longitudinale selon la Fig. précédente de l'emplacement du dispositif selon l'invention en position repos ;
La Fig. 4 est une vue longitudinale selon les Fig. 2 et 3 de l'emplacement du dispositif selon l'invention en position de mise en place, bavette relevée ;
La Fig. 5 est une vue longitudinale selon les Fig. 2, 3 et 4 de l'emplacement du dispositif selon l'invention en position de mise en place, bavette béquille relevées ;

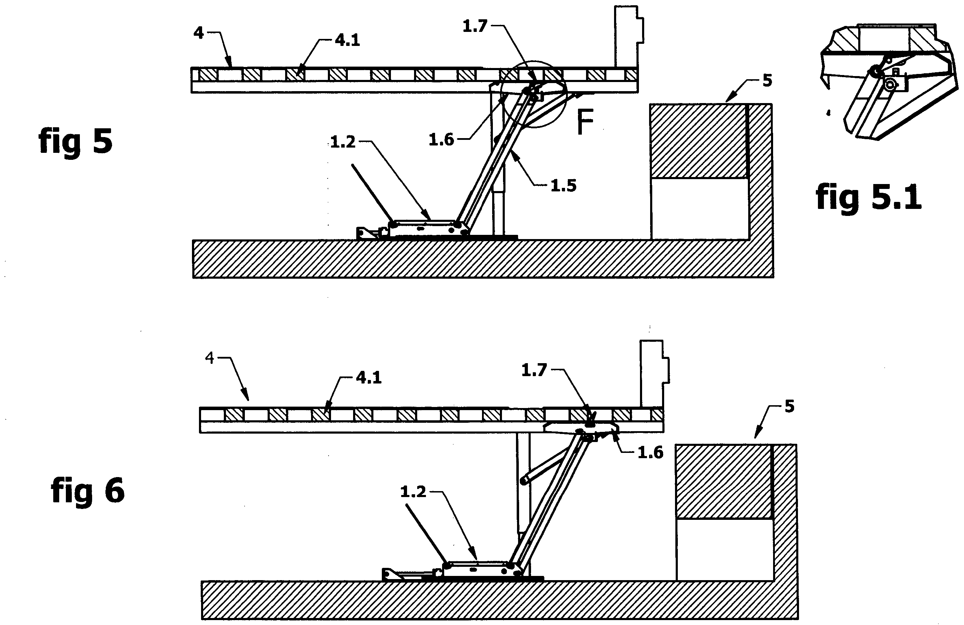

La Fig. 5. 1 est une vue de côté de la tête de la béquille relevée selon la Fig. précédente en contact avec les traverses de renfort plancher de la caisse mobile ;
La Fig. 6 est une vue longitudinale selon les Fig. 2, 3 et 4 de l'emplacement du dispositif selon l'invention en position de mise en place, bavette béquille relevées davantage avancé sous le porte-à-faux, la butée d'arrêt escamotable de la tête de béquille sortie ;

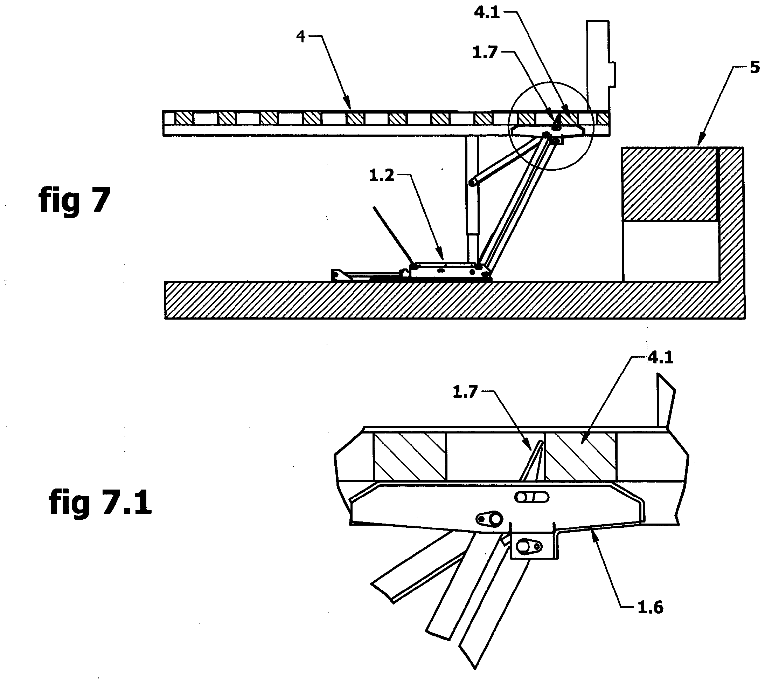

La Fig. 7 est une vue longitudinale selon les Fig. 2, 3, 4 et 5 de l'emplacement du dispositif selon l'invention en position d'immobilisation de la caisse, bavette béquille relevées ;
La Fig. 7. 1 est une vue de côté de la tête de la béquille relevée selon la Fig. précédente verrouillant les traverses de renfort plancher ce qui bloque la caisse mobile ;

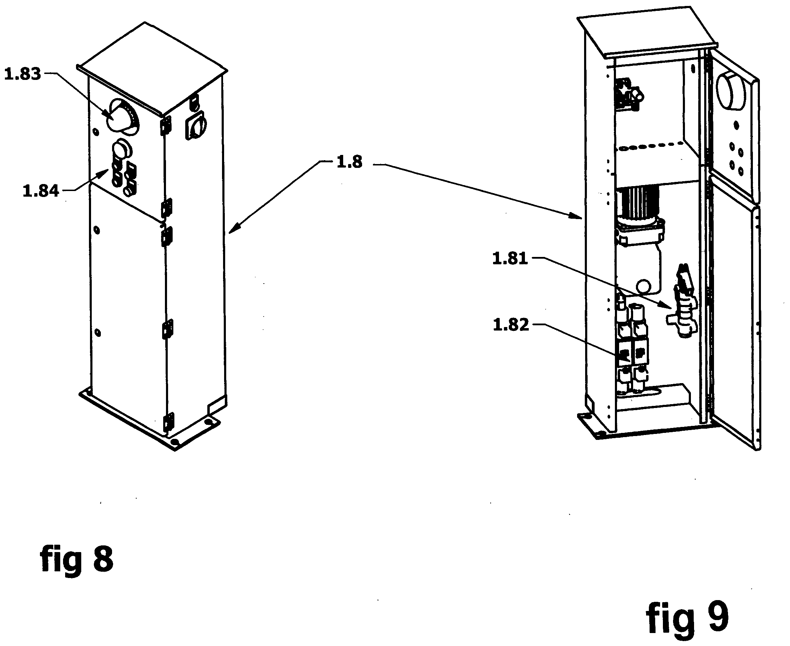

La Fig. 8 est une vue en élévation de ¾ de côté de la colonne de commande selon l'invention porte fermée ;
La Fig. 9 est une vue en élévation de ¾ avant de la colonne de commande selon l'invention porte ouverte.

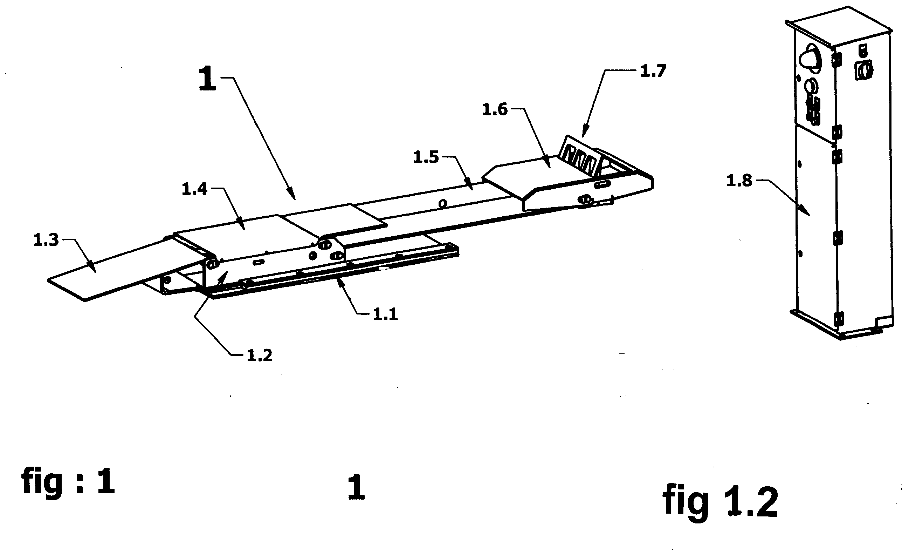

Le dispositif de béquillage 1 selon l'invention représentée en position repos sur les figures 1 et 1.2 comprend une base 1.1. Cette base est ancrée dans le sol. Un chariot 1.2 est disposé coulissant dans la base 1.1 qui sert de moyen de guidage ou rails pour le chariot. Le chariot est mu par un dispositif hydraulique. Le chariot 1.2 est équipé à l'arrière d'une bavette de sécurité 1.3. Celle-ci 1.3 se présente sous forme d'une plaque métallique qui peut pivoter vers le haut autour d'un axe placée à l'extrémité arrière du chariot.

Sur le dessus le chariot présente un capot de fermeture plat 1.4 cachant et protégeant des organes de fonctionnement placé dans le chariot 1.2.

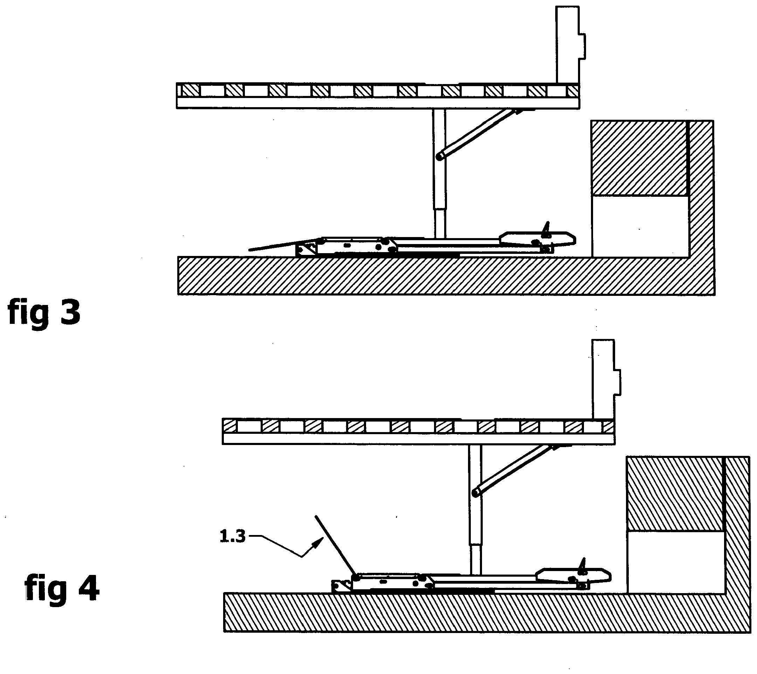

Selon l'invention, le chariot 1.2 est encore équipé d'une béquille escamotable ou amovible sur sa partie avant. La béquille escamotable comprend au moins un bras d'élévation 1.5 pivotant vers le haut selon un axe ou une charnière placé à l'avant du chariot. À son extrémité, au moins un bras 1.5 est prolongé par une tête de blocage 1.6 qui est munie en partie haute d'une butée d'arrêt escamotable 1.7 par pivotement dans la tête. Dans la variante de réalisation avantageuse représentée sur les figures 3 à 7, les bras d'élévation 1.5 forment un pantographe. Ce qui permet de maintenir la tête de blocage 1.6 parallèle au sol, quelque soit son niveau d'élévation.

La commande du chariot et de ses équipements est située dans une armoire technique. Cette armoire technique 1.8 se présente sous forme d'une colonne déportée par rapport au chariot 1.2, colonne technique 1.8 coiffée d'un coffret électrique de commande déplaçable.

La structure à béquilles de réception de chargement représentée sur la figure 2 est une caisse C. Cette caisse 4 est posée sur le sol 5 via quatre béquilles, 4. 2, 4. 3, 4.4, 4.5 qui lui servent de pieds. Ces derniers n'étant pas à l'extrémité de la caisse 4 deux porte-à-faux 4.6, 4.7 sont formés aux deux extrémités. Par conséquent, ces extrémités s'étendant au-dessus d'un vide. Un poids important comme celui d'un chariot élévateur et du chargement arrivés dans cette position peut déclencher la chute de cette extrémité de la caisse 4 qui dans son ensemble se cabre, l'autre extrémité se soulevant.

En vue d'éviter ce type d'accident le dispositif de béquillage 1 selon l'invention est placé dans l'axe longitudinal du quai et de la caisse. Le moyen de guidage 1.1 ancré dans le sol permet un déplacement en suivant cet axe.

Le dispositif de béquillage 1 dans son emplacement par rapport au quai et à la caisse est représenté en coupe longitudinale sur les fig. 3, 4, 5, 6 et 7 qui représentent des étapes de mise en place du dispositif de béquillage 1 avec des détails de la tête de blocage représentés fig. 5.1 et 7.1.

Sur la figure 3, le dispositif de béquillage 1 est en position repos. Cela signifie que la bavette de sécurité1.3 et la béquilles sont en position basse de même le capot plat 1. 4 est fermé c'est-à-dire à l'horizontale. En première étape la bavette 1. 3 est relevée (fig. 4), L'étape représentée figure 5 représente la montée des bras d'élévation 1. 5. Ces bras 1. 5 ou ce pantographe est terminé par une tête de blocage 1. 6. Cette tête de blocage est montée jusqu'au contact des traverses de renfort du plancher de la caisse mobile 4 comme cela est représenté sur la vue de détail fig. 5.1. Le chariot 1. 2 c'est-à-dire la base coulissante du dispositif est un peu avancée, les bras d'élévation ont ramené la tête de blocage 1. 6 en contact avec le dessous de la caisse mobile 4. La base coulissante continue d'avancer comme cela est représenté sur la fig. 6 ainsi que la tête de blocage 1. 6. La butée d'arrêt escamotable 1. 7 n'ayant plus d'appuis sur la traverse a repris sa position normale. C'est-à-dire déployée vers le haut. Sur la fig. 7 et le détail représenté fig. 7.1 la caisse mobile 4 est bloquée. Le chariot 1.2 a avancé en entraînant la tête de blocage 1. 6 jusqu'au signal donné par la butée d'arrêt 1.7 qui a basculée en butant sur une des traverses 4.1 de la caisse mobile 4.

L'armoire technique 1.8 se présentent sous forme d'une colonne représentée fig. 8 portes fermées. Un moyen d'alarme 1. 83 est visible depuis l'extérieur qui comprend un combiné d'une sirène et d'un flash lumineux. Ce moyen d'alarme est connecté à la bavette de sécurité. Un ensemble de boutons de commande des portables 1. 84 est lui aussi accessible depuis l'extérieur de la colonne technique 1.8.

L'ouverture de la porte inférieure de la colonne technique 1. 8 représentées fig. 9 permet un accès à une pompe à main 1. 81 pour le déblocage manuel en cas de coupure de courant. Ce déblocage est associé à des moyens de commande de fonctions 1.82 qu'il est possible de choisir manuellement à l'intérieur de la colonne technique 1.

Si un camion porteur non prévu s'engage sous la caisse mobile 4, la bavette1. 3 étant relevée sera poussée par le pare-chocs arrière du camion et déclenchera la sirène lumineuse située sur la colonne technique 1.8 pour signaler au chauffeur un arrêt immédiat avant destruction de la béquille amovible.

Le programme du dispositif selon l'invention comprend les étapes suivantes quand le manutentionnaire appui sur le bouton : « mise en place béquille »

Actions conduisant à l'immobilisation de la structure :
- A1: par commande au niveau de la colonne technique 1.8 l'ordre de monter s'enclenche, la bavette de protection 1.3 se lève et la tête de blocage monte pendant le temps déterminé jusqu'au contact avec les renforts du plancher de la structure 4 ;
- C1: l'ordre de translation vers l'avant fait avancer le chariot jusqu'au signal de « structure 4 bloquée » donnée par le détecteur situé sur la tête ;
- D1: ce détecteur bloque la translation et donne une autorisation électrique pour l'asservissement des autres équipements de quai et allume le voyant vert autorisation pour les caristes et allume le feu rouge situé sur la colonne déportée.

La libération de la structure s'obtient par les étapes inverses.

L'invention s'applique à l'utilisation d'un dispositif de béquillage 1 comprenant un chariot 1.2 plat et coulissant équipé d'une béquille escamotable vérin commandée depuis une colonne déportée1.8 tel que décrit ci-dessus pour immobiliser une caisse mobile 4 pendant le chargement ou le déchargement de marchandises de la caisse mobile 4 à un quai chargement et déchargement.

Bien que l'invention ait été décrite en liaison avec des structures particulières, elle n'y est nullement limitée et on peut y apporter de nombreuses variantes de réalisations. Par exemple la béquille escamotable peut comprendre un ou plusieurs vérins ou moteurs.

Les combinaisons des différentes réalisations représentées sur les figures ou décrites ci-dessus ne sortent pas du cadre de l'invention.

### Signes de référence

1.1. Base
1.2. Chariot
1.3. Bavette de sécurité
1.4. Capot de fermeture
1.5. Bras d'élévation de la béquille
1.6. Tête de blocage
1.7 Butée d'arrêt escamotable
1.8. Colonne technique
4. Caisse C
4.1. Traverse
4.2. Béquille
4.3. Béquille
4.4. Béquille
4.5. Béquille
5. Sol
4.6. Porte-à-faux
4.7. Porte-à-faux
1.81. Pompe à main
1.82. Moyens de commande de fonctions
1.83. Moyen d'alarme
1.84. Ensemble de boutons de commande

Les signes de références insérés après les caractéristiques techniques mentionnées dans les revendications ont pour seul but de faciliter la compréhension de ces dernières et n'en limitent aucunement la portée.

## Revendications

1. Dispositif d'immobilisation (1) d'une structure mobile (4) à béquilles de réception de chargement telle qu'une caisse, un plateau ou un conteneur lors de la manutention de marchandise, le dispositif comprenant un chariot (1.2) coulissant sur un moyen de guidage (1.1) ancré dans le sol placé dans l'axe longitudinal du quai et de la structure (4), le chariot (1.2) étant équipé d'une béquille escamotable sur sa partie avant, ladite béquille escamotable comprenant au moins un bras d'élévation (1.5) pivotant vers le haut selon un axe ou une charnière placé à l'avant du chariot, le bras (1.5) étant prolongé à son extrémité par une tête de blocage (1.6),
**caractérisé en ce que** la tête de blocage (1.6) est munie en partie haute d'une butée d'arrêt escamotable (1.7) par pivotement dans la tête (1.6).

2. Dispositif d'immobilisation (1) d'une structure mobile (4) à béquilles selon la revendication précédente, dans le chariot et la béquille escamotable sont commandés depuis une colonne technique déportée (1.8).

3. Dispositif d'immobilisation (1) d'une structure mobile (4) à béquilles selon l'une des revendications précédentes, dans lequel le chariot (1.2) est équipé à l'arrière d'une bavette de sécurité (1.3) qui se présente sous forme d'une plaque métallique qui peut pivoter vers le haut autour d'un axe placée à l'extrémité arrière du chariot (1. 2).

4. Dispositif d'immobilisation (1) d'une structure mobile (4) à béquilles selon l'une des revendications précédentes, dans lequel sur le dessus, le chariot présente un capot de fermeture plat (1.4) cachant et protégeant des organes de fonctionnement placé dans le chariot (1.2).

5. Dispositif d'immobilisation (1) d'une structure mobile (4) à béquilles selon l'une des revendications précédentes, dans lequel les bras d'élévation (1.5) forment un pantographe.

6. Dispositif d'immobilisation (1) d'une structure mobile (4) à béquilles selon l'une des revendications précédentes, dans lequel la commande du chariot et de ses équipements est située dans une armoire technique ; cette armoire technique se présente sous forme d'une colonne déportée par rapport au chariot (1.2).

7. Dispositif d'immobilisation (1) d'une structure mobile (4) à béquilles selon la revendication précédente, dans lequel la colonne technique (1.8) est coiffée d'un coffret électrique de commande déplaçable.

8. Dispositif d'immobilisation (1) d'une structure mobile (4) à béquilles selon l'une des revendications 3 à 6, dans lequel la colonne ou armoire technique (1.8) présente un moyen d'alarme (1.83) visible depuis l'extérieur qui comprend un combiné d'une sirène et d'un flash lumineux ; ledit moyen d'alarme étant connecté à la bavette de sécurité ;

9. Dispositif d'immobilisation (1) d'une structure mobile (4) à béquilles selon la revendication précédente, dans lequel la colonne présentant encore un ensemble de boutons de commande (1.84) accessible depuis l'extérieur de la colonne technique (1.8)

10. Dispositif d'immobilisation (1) d'une structure mobile (4) à béquilles selon l'une des revendications 2 à 9, dans lequel la colonne technique (1. 8) comprenant accessible via une porte une pompe à main (1.81) pour le déblocage manuel en cas de coupure de courant et des moyens de commande de fonctions (1.82) qu'il est possible de choisir manuellement.

11. Procédé conduisant à l'immobilisation d'une structure mobile (4) à béquilles de réception de chargement telle qu'une caisse, un plateau ou un conteneur lors de la manutention, à l'aide d'un programme de mise en œuvre d'un dispositif d'immobilisation d'une structure mobile (4) à béquilles selon la revendication 1, qui comprend au moins les étapes suivantes quand le manutentionnaire appuie sur le bouton (1.84) : « mise en place béquille » :
- étape de montée (A1) déclenchée par une pression d'un bouton enclenchant la commande au niveau de la colonne technique (1.8), à savoir « redressement d'une bavette de protection » et « montée d'une tête de blocage » pendant le temps déterminé en fonction de la vitesse de montée jusqu'au contact avec la partie inférieure de la structure (4) ;
- étape de translation vers l'avant (B1), déclenchée par la pression dudit bouton, à savoir avance du chariot (1.2) jusqu'au signal de « structure (4) bloquée » déclenché par le détecteur situé sur la tête ;
- mise en place du niveleur de quai ou autre moyen de jonction avec le quai (C1), le signal de « structure (4) bloquée » du détecteur enclenche le blocage de la translation et donne une autorisation électrique pour la mise en place du niveleur de quai ou autre moyen de jonction avec le quai et allume le voyant vert « autorisation » pour les caristes et allume le feu rouge situé sur la colonne déportée.

12. Procédé conduisant à l'immobilisation d'une structure mobile (4) selon la revendication précédente, dans lequel est effectué l'utilisation d'un dispositif de béquillage (1) comprenant un chariot (1.2) plat et coulissant équipé d'une béquille escamotable vérin commandée depuis une colonne déportée (1.8) tel que décrit ci-dessus pour immobiliser une caisse mobile (4) pendant le chargement ou le déchargement de marchandises de la caisse mobile (4) à un quai chargement et déchargement.

## Patentansprüche

1. Vorrichtung (1) zur Immobilisierung einer beweglichen Struktur (4) mit Stützen zur Aufnahme einer Last wie etwa eines Behälters, einer Platte oder eines Containers beim Warenumschlag, wobei die Vorrichtung aufweist:
einen Schlitten (1.2), der verfahrbar ist auf
einem im Boden verankerten Führungsmittel (1.1), das sich in der Längsachse der Rampe und der Struktur (4) erstreckt, wobei der Schlitten (1.2) an seinem Vorderteil mit einer einziehbaren Stütze ausgestattet ist, die mindestens einen Hubarm (1.5) aufweist, der um eine Achse oder ein Gelenk vorne an dem Schlitten nach oben schwenkbar ist, wobei der Arm (1.5) an seinem Ende durch einen Arretierkopf (1.6) verlängert ist,
**dadurch gekennzeichnet, dass** der Arretierkopf (1.6) im oberen Bereich mit einem durch Verschwenken in dem Kopf (1.6) versenkbaren Anschlagelement (1.7) versehen ist.

2. Vorrichtung (1) zur Immobilisierung einer beweglichen Struktur (4) mit Stützen nach dem vorhergehenden Anspruch, wobei der Schlitten und die einziehbare Stütze von einer ausgelagerten Techniksäule (1.8) gesteuert werden.

3. Vorrichtung (1) zur Immobilisierung einer beweglichen Struktur (4) mit Stützen nach einem der vorhergehenden Ansprüche, wobei der Schlitten (1.2) hinten mit einer Sicherheitsschürze (1.3) in Form einer Metallplatte ausgestattet ist, welche um eine am hinteren Ende des Schlittens (1.2) angeordnete Achse nach oben verschwenkbar ist.

4. Vorrichtung (1) zur Immobilisierung einer beweglichen Struktur (4) mit Stützen nach einem der vorhergehenden Ansprüche, wobei der Schlitten auf der Oberseite eine flache Abdeckkappe (1.4) aufweist, welche in dem Schlitten (1.2) angeordnete Funktionsbauteile verbirgt und schützt.

5. Vorrichtung (1) zur Immobilisierung einer beweglichen Struktur (4) mit Stützen nach einem der vorhergehenden Ansprüche, wobei die Hubarme (1.5) eine Doppelscherenstruktur bilden.

6. Vorrichtung (1) zur Immobilisierung einer beweglichen Struktur (4) mit Stützen nach einem der vorhergehenden Ansprüche, wobei sich die Steuerung des Schlittens und seiner Ausrüstungsteile in einem Schaltschrank befindet, der in Form einer in Bezug auf den Schlitten (1.2) entfernt angeordneten Säule vorliegt.

7. Vorrichtung (1) zur Immobilisierung einer beweglichen Struktur (4) mit Stützen nach dem vorhergehenden Anspruch, wobei der Techniksäule (1.8) ein versetzbarer elektrischer Schaltkasten aufgesetzt ist.

8. Vorrichtung (1) zur Immobilisierung einer beweglichen Struktur (4) mit Stützen nach einem der Ansprüche 3 bis 6, wobei die Techniksäule oder der Schaltschrank (1.8) ein von außen sichtbares Alarmmittel (1.83) aufweist, das eine kombinierte Sirene mit Blinkleuchte umfasst und mit der Sicherheitsschütze verbunden ist.

9. Vorrichtung (1) zur Immobilisierung einer beweglichen Struktur (4) mit Stützen nach dem vorhergehenden Anspruch, wobei die Säule ferner einen Satz von Steuertasten (1.84) aufweist, der von außerhalb der Techniksäule (1.8) zugänglich ist.

10. Vorrichtung (1) zur Immobilisierung einer beweglichen Struktur (4) mit Stützen nach einem der Ansprüche 2 bis 9, wobei die Techniksäule (1.8) eine über eine Tür zugängliche Handpumpe (1.81) zur manuellen Entriegelung im Fall eines Stromausfalls sowie manuell wählbare Funktionssteuermittel (1.82) aufweist.

11. Verfahren zur Immobilisierung einer beweglichen Struktur (4) mit Stützen zur Aufnahme einer Last wie etwa eines Behälters, einer Platte oder eines Containers beim Warenumschlag, mit Hilfe eines Programms zur Bedienung einer Vorrichtung zur Immobilisierung einer beweglichen Struktur (4) mit Stützen nach Anspruch 1, wobei das Verfahren bei Druck des Verlademitarbeiters auf die Taste (1.84) "Stütze in Stellung bringen" mindestens die folgenden Schritte umfasst:
- Aufstellschritt (A1), ausgelöst durch Druck auf eine Taste, welche eine Steuerung in der Techniksäule (1.8) einleitet, nämlich "Schutzschürze aufrichten" und "Arretierkopf anordnen", während der Zeit, die in Abhängigkeit von der Aufstellgeschwindigkeit bis zum Kontakt mit der Unterseite der Struktur (4) bestimmt wird;
- Vorschiebeschritt (B1), ausgelöst durch Druck auf die genannte Taste, nämlich Vorschub des Schlittens (1.2) bis zum Auslösen des Signals "Struktur (4) arretiert" durch den auf dem Kopf angeordneten Sensor;
- Instellungbringen der Überladebrücke oder einer anderen Verbindungseinrichtung zu der Rampe (C1), wobei das Signal "Struktur (4) arretiert" des Sensors eine Sicherung gegen Verschieben einleitet und eine elektrische Freigabe für das Instellungbringen der Überladebrücke oder anderen Verbindungseinrichtung zu der Rampe erteilt und die grüne Leuchte "Freigabe" für Stapelfahrer anschaltet und die rote Leuchte auf der ausgelagerten Säule anschaltet.

12. Verfahren zur Immobilisierung einer beweglichen Struktur (4) nach dem vorhergehenden Anspruch, wobei eine Stützvorrichtung (1) mit einem flachen, verfahrbaren Schlitten (1.2), ausgestattet mit einer mittels Hubzylinder einziehbaren Stütze, die von einer ausgelagerten Säule (1.8) wie oben beschrieben gesteuert wird, Verwendung findet, um einen Wechselbehälter (4) während des Ladens oder Entladens von Waren des Wechselbehälters (4) an einer Lade- oder Entladerampe zu immobilisieren.

## Claims

1. Device for immobilising (1) a mobile structure (4) with leg stands receiving a load such as a swap body, a platform body or a container during the handling of goods, said device comprising a carriage (1.2) sliding on a guide means (1.1) anchored in the ground placed in the longitudinal axis of the loading bay and the structure (4), the carriage (1.2) being equipped with a retractable prop on its front part, said retractable prop comprising at least a lift arm (1.5) pivoting upwards on an axis or hinge placed at the front of the carriage, the arm (1.5) being extended at the end by a blocking head (1.6), **characterised in that** the blocking head (1.6) is fitted at the top with a retractable blocking device (1.7) which pivots in the head (1.6).

2. Device for immobilising (1) a mobile structure (4) with leg stands according to the previous claim, wherein the carriage and the retractable prop are controlled from a remote technical column (1.8).

3. Device for immobilising (1) a mobile structure (4) with leg stands according to one of the preceding claims, wherein the carriage (1.2) is equipped at the rear with a safety flap (1.3) which takes the form of a metal plate which can pivot upwards around an axis placed at the rear end of the carriage (1. 2).

4. Device for immobilising (1) a mobile structure (4) with leg stands according to one of the preceding claims wherein, on the top of carriage there is a flat cover (1.4) concealing and protecting the operational components placed inside the carriage (1.2).

5. Device for immobilising (1) a mobile structure (4) with leg stands according to one of the preceding claims, wherein the lift arms (1.5) form a pantograph.

6. Device for immobilising (1) a mobile structure (4) with leg stands according to one of the preceding claims, wherein the controls for the carriage and its equipment are situated in a technical cabinet, which technical cabinet takes the form of a column separate and remote from the carriage (1.2).

7. Device for immobilising (1) a mobile structure (4) with leg stands according to the previous claim, wherein the technical column (1.8) is topped by a removable electric control box.

8. Device for immobilising (1) a mobile structure (4) with leg stands according to one of claims 3 to 6 wherein the technical column or cabinet (1.8) includes an alarm means (1.83) visible from the outside which comprises a combination of a siren and a flashing light, said alarm means being connected to the safety flap;

9. Device for immobilising (1) a mobile structure (4) with leg stands according to the previous claim, wherein the column also contains a set of control buttons (1.84) accessible from the outside of the technical column (1.8)

10. Device for immobilising (1) a mobile structure (4) with leg stands according to one of claims 2 to 9, wherein the technical column (1. 8) comprises, accessible via a door, a hand pump (1.81) to manually release the device in the event of a power cut and function control means (1.82) that it is possible to select manually.

11. Method for immobilising a mobile structure (4) with leg stands receiving a load such as a swap body, a platform body or a container during handling operations, by means of a programme implementing a device for immobilising a mobile structure (4) with leg stands according to claim 1, which comprises at least the following phases when the freight handler presses the "position prop" button (1.84):
- raising phase (A1) triggered by pressing on a button that engages the control in the technical column (1.8), namely "raise protective flap" and "raise blocking head" for the time determined according to the speed at which the arm is raised until it comes into contact with the lower part of the structure (4);
- forward movement phase (B1), triggered by pressing on said button, namely "advance carriage" (1.2) until the "structure (4) blocked" signal is triggered by the sensor situated on the head;
- positioning of the dock leveller or other means of bridging the gap with the dock (C1), the "structure (4) blocked" signal from sensor engaging the blocking of the forward movement and giving an electrical authorisation for the positioning of the dock leveller or other means of bridging the gap with the dock and bringing on the green "authorisation" light for the forklift truck drivers and the red light situated on the remote column.

12. Method for immobilising a mobile structure (4) according to the previous claim, wherein a propping device (1) is used comprising a flat, sliding carriage (1.2) equipped with a retractable prop with a cylinder controlled from a remote column (1.8) such as that described above to immobilise a mobile swap body (4) during the loading or unloading of goods between the mobile swap body (4) and a loading and unloading dock.
